# EUROPEAN PATENT SPECIFICATION

(11) **EP 4 285 331 B1**
(45) Date of publication and mention of the grant of the patent: **30.09.2026**
(21) Application number: 21728563.4
(22) Date of filing: 27.05.2021
(51) Int. Cl.: G06T 15/06, G06T 19/20

(54) **IMAGE DEFORMATION APPARATUS AND METHOD**
BILDUMFORMUNGSVORRICHTUNG UND VERFAHREN
DISPOSITIF ET PROCÉDÉ DE TRAITEMENT DE DÉFORMATION D'IMAGE

(43) Date of publication of application: 06.12.2023
(73) Proprietor: Huawei Technologies Co., Ltd., Shenzhen, Guangdong 518129 (CN)
(72) Inventor: YUAN, Shanxin, 80992 Munich (DE); VASILEIADIS, Manolis, 80992 Munich (DE); ZHOU, Yiren, 80992 Munich (DE); LEONARDIS, Ales, 80992 Munich (DE); SZABO, Attila, 80992 Munich (DE)
(74) Representative: Gill Jennings & Every LLP
(86) International application number: PCT/EP2021/064136
(87) International publication number: WO 2022/248042

(56) References cited:
- US-A1- 2021 049 811
- US-B1- 10 529 137

## Description

### FIELD OF THE INVENTION

This invention relates to image deformation, for example for controlling images with novel poses.

### BACKGROUND

Image deformation can enable existing images to be modified, manipulated, and controlled for various applications.

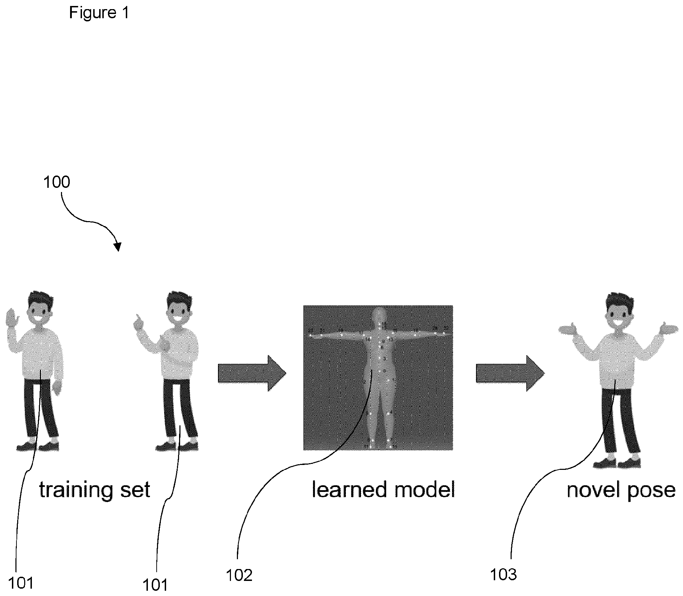

Figure 1 illustrates an example input image undergoing an exemplary image deformation process. The input image 101 may comprise a feature such as a body. The body may be a human or animal body. In Figure 1, the body is a human body. The body may include characteristics such as the arrangement and appearance. As shown in Figure 1, the arrangement may be a pose, such as having an arm in the air. The appearance may be the clothing or look of the face of the human body. The characteristic features may be extracted from the input image 101 into a learned model 102.

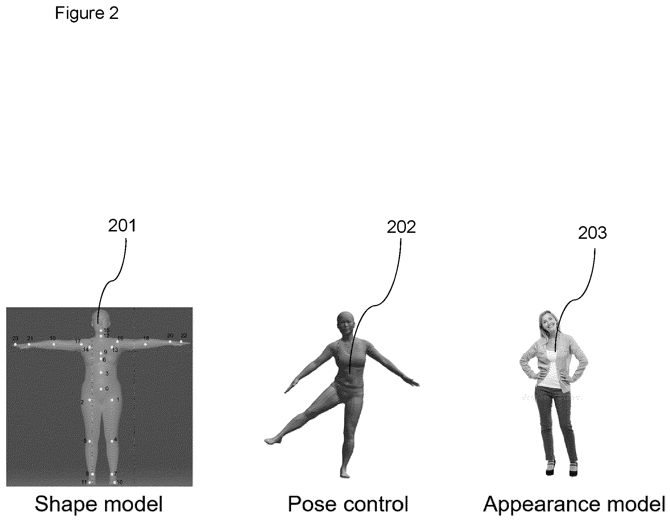

Figure 2 illustrates example characteristics of an input image. The arrangement of the feature may be modelled by a shape model 201 and controlled by pose control 202. The appearance of the feature may be modelled by the appearance model 203.

It can be advantageous to deform the arrangement of the body while maintaining the overall appearance. For example, it may be advantageous to modify the pose of the human body such that both arms are in the air while also maintaining the overall appearance of the human body. If this pose is not already known from an input image, then this pose may be known as a novel pose.

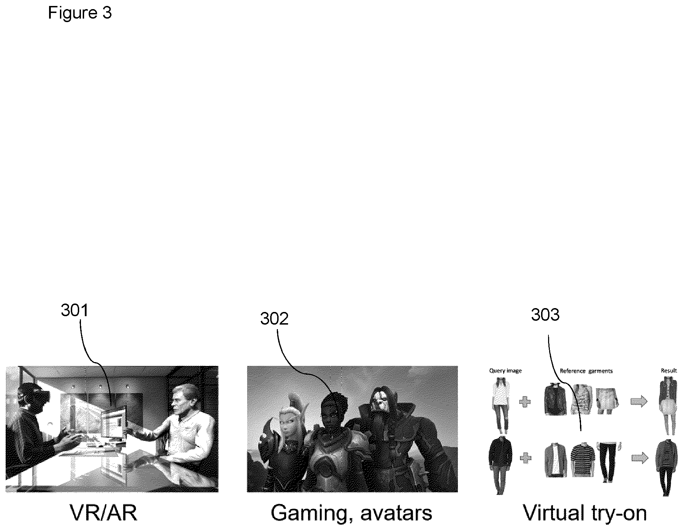

Figure 3 illustrates example implementations of image deformation. The image deformation may be implemented in virtual reality (VR) or augmented reality (AR) 301, gaming and avatars 302, and virtual try-on 303.

It is known to deform human 3D representations. For example, through a skinned multi-person linear body model (SMPL) or a sparse trained articulated human body regressor (STAR). These generative shape models may provide interpretable control of pose and shape.

Recently Neural Rendering (NeRF) has become a popular topic in research. NeRF-based methods may provide high rendering quality and may achieve photorealistic novel view synthesis.

SMPL and STAR, and NeRF may provide issues when looking to control a novel pose of the feature. These issues may result from (i) volumetric appearance representation, (ii) controllable shape representation (iii) 3D reconstruction capability from 2D images and initial blendshape and camera parameters, and (iv) differentiable rendering capability. Issues may also arise when trying to combine these capabilities.

Combining these capabilities may be advantageous for VR/AR 301, gaming and avatars 302, and virtual try-on 303 implementations.

In Ben Mildenhall and Pratul P. Srinivasan and Matthew Tancik and Jonathan T. Barron and Ravi Ramamoorthi and Ren Ng. NeRF: Representing Scenes as Neural Radiance Fields for View Synthesis. ECCV 2020 [NeRF] a high-quality neural network-based differentiable renderer is disclosed. The renderer may reconstruct a volumetric 3D representation from a set of images with known camera parameters. This renderer is focussed on controlling the learned 3D objects (e.g. change the pose of a human) and rather than reconstructing a rigid scene.

In Park, Keunhong and Sinha, Utkarsh and Barron, Jonathan T. and Bouaziz, Sofien and Goldman, Dan B and Seitz, Steven M. and Martin-Brualla, Ricardo. Deformable Neural Radiance Fields. arXiv:2011.12948 2020 [DNeRF] a system is disclosed that is focused on reconstructing deformable scenes from a set of images by deforming the 3D volume first, before feeding the 3D points from the cast rays into the NeRF rather than controlling the learned 3D objects (e.g. change the pose of a human).

In Loper, Matthew and Mahmood, Naureen and Romero, Javier and Pons-Moll, Gerard and Black, Michael J. SMPL: A Skinned Multi-Person Linear Model. SIGGRAPH Asia 2015 and Osman, Ahmed A A and Bolkart, Timo and Black, Michael J. STAR: A Sparse Trained Articulated Human Body Regressor. ECCV 2020 a controllable generative mesh-based blendshape model for representing 3D humans is disclosed. The model is trained with 3D scans of humans rather than appearance representation.

In Peng, Sida and Zhang, Yuanqing and Xu, Yinghao and Wang, Qianqian and Shuai, Qing and Bao, Hujun and Zhou, Xiaowei. Neural Body: Implicit Neural Representations with Structured Latent Codes for Novel View Synthesis of Dynamic Humans. CVPR 2021 a combination of NeRF and SMPL models are disclosed. The system is focused on deforming the 3D volume from deformed space to canonical space, before feeding the 3D points to the NeRF, the deformation is conditioned on the SMPL parameters, rather than retaining the capability of controlling the human 3D models after learning the appearance model.

In Saito, Shunsuke and Simon, Tomas and Saragih, Jason and Joo, Hanbyul. PIFuHD: Multi-Level Pixel-Aligned Implicit Function for High-Resolution 3D Human Digitization. CVPR 2020 it is disclosed to learn a coarse-to-fine implicit function, from aligned 2D/3D training samples, which can predict the 3D occupancy at any point in space, given as input a single RGB image. This approach is focused on generating high quality, pixel aligned 3D models of the input human by dense sampling the 3D space and employing the marching cubes algorithm at inference. However, the output is a rigid 3D mesh, which may not be rigged and reposed.

In Huang, Zeng and Xu, Yuanlu and Lassner, Christoph and Li, Hao and Tung, Tony. Arch: Animatable reconstruction of clothed humans. CVPR 2020 it is disclosed to train a semantic deformation field, which learns the correspondences between the input image space and the canonical pose space. It is followed by an implicit function which reconstructs a rigged 3D human in the canonical space. During training, a differentiable renderer may be employed to refine the colour and normal estimation. However, the body parts of the reconstructed 3D human are rigid and may not realistically deform, since during inference only classic rendering of the 3D mesh is employed.

In CN 110033405 A using a video stream input, employing pose net and mocap to get stable pose sequences is disclosed. Next, a conditional GAN is used for video generation, from an input of a customized virtual actor. However, the system may not be focused on detailed control over the human pose and shape, such that the rendering quality and robustness may also be limited.

In WO 2020/228322 A1 it is disclosed to receive the skeleton parameters adjustment information of a 3D local human body model as input. Then, based on this information, the system may adjust the skeleton parameters. Finally, based on adjusted skeleton parameters, it generates the 3D local human body model. However, the system may not focus on detailed control over the human pose and shape, such that the rendering quality may be poor.

In CN 111354079 A it is disclosed to receive a 2D face image input. A 3D face reconstruction network is used to extract 3D face features. Next, the system uses a renderer simulation network, to generate the virtual human face. Last, the system uses face consistency networks, to calculate the loss of the virtual face compared to the 2D face image. The system may not focus on interpretable control over the human pose and shape, such that the rendering quality may not be realistic.

US 10 529 137 B1 describes a method including receiving visual input comprising a human within a scene, detecting a pose associated with the human using a trained machine learning model that detects human poses to yield a first output, estimating a shape associated with the human using a trained machine learning model associated that detects shape to yield a second output, recognizing the scene associated with the visual input using a trained convolutional neural network which determines information about the human and other objects in the scene to yield a third output, and augmenting reality within the scene by leveraging one or more of the first output, the second output, and the third output to place 2D and/or 3D graphics in the scene.

It is desirable to develop an apparatus and method that overcomes the above problems.

### SUMMARY

The present invention is defined by the features disclosed in the dependent claims. Additional embodiments are defined in the dependent claims.

By rending the output image comprising a deformed feature in dependence on the deformed arrangement parameters and the input image appearance parameters this may enable the arrangement of the output image to be controlled while maintaining the input image feature overall appearance. This may be advantageous as the arrangement, such as the pose or shape, can be modified as required by the apparatus, while at the same time the overall appearance of the feature is maintained. This may result in a seamless output image rendering which accurately corresponds to the input image appearance, to the viewer, while enabling the arrangement to be modified or manipulated.

By casting rays from the pixels of the output image with the location of the deformed feature being defined by the deformed arrangement this may enable the deformed feature of the output image to be accurately positioned in the deformed location. In other words, the arrangement parameters may provide a mapping for the deformed feature. For example, the arm of a human may be accurately deformed to a new location. Similarly, by casting rays from the pixels of the output image with the appearance of the pixels being defined by the appearance parameters this may enable the appearance of the deformed feature of the output image to correspond to the appearance of the feature of the input image.

In some implementations, the apparatus may be configured wherein the one or more processors are configured to generate further deformed arrangement parameters by further modifying the location of at least one point of the feature; and render a further output image comprising a further deformed feature corresponding to the feature in dependence on the further deformed arrangement parameters and the appearance parameters.

In some implementations, the apparatus may be configured wherein the one or more processors are configured to render the further output image by casting rays from pixels of the further output image, the location of the further deformed feature being defined by the further deformed arrangement parameters and the appearance of the pixels being defined by the appearance parameters.

By further modifying the location of at least one point of the feature this may enable the further deformed feature to position in a different position to the deformed feature for the same input image. In this way, this may enable the deformation of the feature to be controlled. For example, if the feature is a human body, then the arms may be moved into different positions.

In some implementations, the apparatus may be configured wherein the one or more processors are configured so that the feature comprises a human or animal body.

By deforming a feature that represents a human or animal body this may enable the apparatus to be used for VR/AR, gaming and avatars, and virtual try-on implementations, for example.

In some implementations, the apparatus may be configured wherein the one or more processors are configured so that the arrangement parameters are indicative of a pose of the feature.

By configuring the arrangement parameters to be indicative of a pose this enable the deformation apparatus to modify the pose of the feature.

In some implementations, the apparatus may be configured wherein the one or more processors are configured so that the arrangement parameters are indicative of a shape of the feature.

By configuring the arrangement parameters to be indicative of a shape this enable the deformation apparatus to modify the shape of the feature, such as by modifying the aspect ratio by increasing height or width.

In some implementations, the apparatus may be configured wherein the one or more processors are configured so that the appearance parameters comprise the colour of the pixels of the feature.

By configuring the appearance parameters to comprise the colour of the pixels of the feature this may enable the colour of the deformed feature of the output image to correspond to the colour of the feature of the input image. In other words, to the viewer, the overall output image may comprise the same colours as the input image.

In some implementations, the apparatus may be configured wherein the one or more processors are configured so that the appearance parameters comprise the density of the pixels of the feature.

By configuring the appearance parameters to comprise the density of the pixels of the feature this may enable the density of the deformed feature of the output image to correspond to the density of the feature of the input image. In other words, to the viewer, the overall output image may comprise the same light absorption in the volume as the input image.

In some implementations, the apparatus may be configured wherein one or more processors are configured to repeat the steps of any preceding claim for at least one subsequent input image to render a corresponding subsequent output image; and render a 3D output image from the at least two output images.

In some implementations, the apparatus may be configured wherein the one or more processors are configured so that output image and the subsequent output image are 2D and comprise the same deformed feature from different viewpoints.

In some implementations, the apparatus may be configured wherein the one or more processors are configured to render the 3D output image from the at least two output images by numerical integration.

By repeating the steps for subsequent input images this may enable the apparatus to render combine, or integrate, the output images to form a 3D output image. In this way, a 3D output image may comprise the deformed features. The apparatus may also provide a means for receiving a 3D input image, broken down into 2D input images, and outputting 2D images which are combined to form an output 3D image.

### BRIEF DESCRIPTION OF THE FIGURES

The present invention will now be described by way of example with reference to the accompanying drawings. In the drawings:
Figure 1 illustrates the stages an example input image may undergo in an exemplary image deformation process.
Figure 2 illustrates example characteristics of an input image.
Figure 3 illustrates example implementations of image deformation.
Figure 4 schematically illustrates the stages an input image may undergo in an exemplary image deformation apparatus.
Figure 5 schematically illustrates an exemplary structure of the network architecture used in the image deformation apparatus.
Figure 6 illustrates an example method for deforming an input image.
Figure 7 illustrates an example of an apparatus configured to perform the methods described herein.
Figure 8 schematically illustrates the stages an input image may undergo in an exemplary image deformation training apparatus.
Figure 9 illustrates an example method for training an image deformation model.
Figure 10 illustrates a post synthesis and a novel view output image of an exemplary embodiment.

### DETAILED DESCRIPTION

The apparatuses and methods described herein concern using an image deformation model and training said image deformation model.

Embodiments of the present system may tackle one or more of the problems previously mentioned by rending the output image comprising a deformed feature in dependence on the deformed arrangement parameters and the input image appearance parameters. In this way, this may enable the arrangement of the deformed feature of the output image to be controlled while maintaining the overall appearance of the feature of the input image.

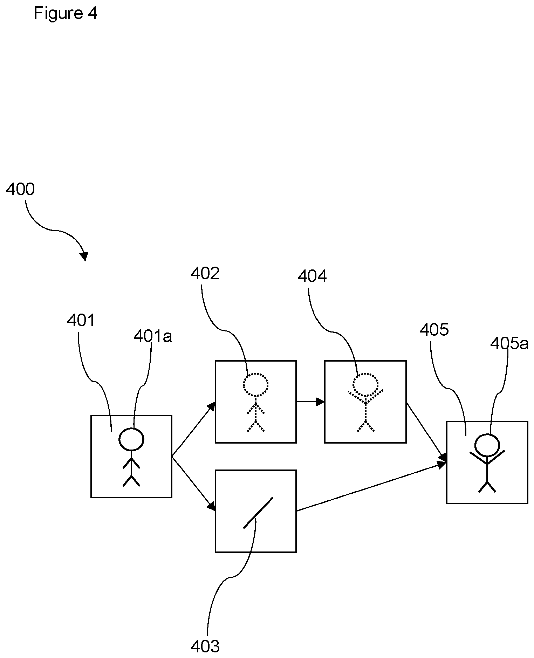

Figure 4 schematically illustrates the stages an input image may undergo in an exemplary image deformation apparatus.

The apparatus is configured to receive an input image 401. The input image 401 comprises an input image feature 401a. The feature 401a may comprise a body, such as a human or animal body. By having a body feature 401a the image deformation apparatus may be used for VR/AR, gaming and avatars, and virtual try-on implementations, for example. In these implementations, aspects of the body, such as the arms or legs, may be deformed to present the viewer with an animated body representation.

The apparatus is configured to extract arrangement parameters 402 of the feature 401a from the input image 401. There may be a plurality, or a set, of arrangement parameters 402. Each arrangement parameter 402 defines a location of a point of the feature 401a. In other words, the extraction of the arrangement parameters 402 may enable the apparatus to locate the position of a plurality of locations of the feature 401a on the input image 401. This is illustrated in Figure 4 by the dotted outline in the arrangement parameters 402 corresponding to the feature 401a from the input image 401.

The arrangement parameters 402 may be indicative of a pose of the feature 401a. In other words, the location of the points of the feature 401a may be combined to define the pose of the feature 401a. For example, if the feature 401a is a human body, then the arrangement parameter 402 points located along the arms may by indicative of the pose of the human's arms. In this way, the apparatus may be configured to modify the pose of the feature 401a. Using the above example, the arms of the human body may be modified from one position to another.

The arrangement parameters 402 may also, or alternatively, be indicative of a shape of the feature 401a. In other words, the location of the points of the feature 401a may be combined to define the shape of the feature 401a. For example, if the feature 401a is a human body, then the arrangement parameter 402 points located along the torso may be indicative of the physique of the human body. In this way, the apparatus may be configured to modify the shape of the feature 401a. Using the above example, the torso of the human body may have its aspect ratio modified to make the human body taller, shorter, thinner, or wider, for example.

The arrangement parameters 402 may represent the arrangement of the feature 401a by one or more blendshape models. For example, the blendshape model may comprise skinned multi-person linear body model (SMPL) or a sparse trained articulated human body regressor (STAR).

The apparatus is configured to extract appearance parameters 403 of the feature 401a from the input image 401. There may be a plurality, or a set, of appearance parameters 403. Each appearance parameter 403 defines appearance information of a point of the feature 401a. In other words, the extraction of the appearance parameters 403 may enable the apparatus to obtain the appearance at different points of the feature 401a on the input image 401. This is illustrated in Figure 4 by the solid line in the appearance parameters 403 corresponding to the solid line of the feature 401a from the input image 401.

The appearance parameters 403 may comprise the colour of the pixels of the feature 401a. In other words, the colour of the pixels in the feature 401a may be combined to give the appearance of the feature 401a. For example, if the feature 401a is a human body, then the appearance parameter 402 may comprise the colour of the human's outfit, or clothing. In this way, the apparatus may be configured to reconstruct the colour of the feature 401a after the deformation of the arrangement. Using the above example, to the viewer, the colour of the clothing may be maintained in the output image.

The appearance parameters 403 may comprise the density of the pixels of the feature 401a. In other words, the density of the pixels in the feature 401a may define the light absorption of the volume of the feature 401a. For example, if the feature 401a is a human body, then the appearance parameter 402 may comprise the density of the image of the human. In this way, the apparatus may be configured to reconstruct the density of the feature 401a after the deformation of the arrangement. Using the above example, to the viewer, the density of the image of the human may be maintained in the output image.

The appearance parameters 403 may represent the appearance of the feature 401a by Neural Radiance Fields (NeRF). NeRF-based appearance models may achieve much higher quality renderings, compared to classic techniques.

The apparatus is configured to deform the arrangement parameters 402 to generate deformed arrangement parameters 404. The deformation involves modifying the location of at least one point of the feature 401a of the input image 401. In other words, the deformed arrangement parameters 404 will at least slightly differ from the arrangement parameters 402. Depending on the number of points in the arrangement parameters 402, i.e. the density of the sampling during extraction of the arrangement parameters 402, it is possible that a plurality of points of the feature 401a may be modified. The number of points that are modified may depend on the extent of the deformation of the feature 401a that is required. For example, as shown in Figure 4, the arms of the human are modified from down to up. In this example, there may be a large number of points to be modified to represent the movement of the arms from one position to another.

The apparatus is configured to render an output image 405 comprising a deformed feature 405a. The deformed feature 405a corresponds to the feature 401a of the input image 401. In other words, the deformed feature 405a, to the viewer, may represent the same feature in a deformed position. For example, as shown in Figure 4, the feature 401a is a human body with arms down. The deformed 405a is the same human body with arms up.

The rendering of the output image 405 is in dependence on the deformed arrangement parameters 404 and the appearance parameters 403. As the appearance parameters 403 relate to the input image 401, the overall appearance of the output image may correspond to the input image 401, such that, to the viewer, the output image 405 comprises the same feature 405a as the input image 401 feature 401a. As the deformed arrangement parameters 404 related to a deformed version of the input image 401, the arrangement of the feature 405a in the output image 405 is a deformed version of the feature 401a in the input image 401.

By rending the output image 405 comprising a deformed feature 405a in dependence on the deformed arrangement parameters 404 and the input image 401 appearance parameters this may enable the arrangement of the output image 405 to be controlled while maintaining the overall appearance of the input image feature 401a. This may be advantageous as the arrangement, such as the pose or shape, can be modified as required by the apparatus, while at the same time the overall appearance of the feature 401a is maintained. This may result in a seamless output image 405 rendering which accurately corresponds to the input image 401 appearance, to the viewer, while enabling the arrangement to be modified or manipulated.

The apparatus may be configured to render the output image 405 by casting rays from pixels of the output image 405. The location of the deformed feature 405a is defined by the deformed arrangement parameters 404. In other words, position of the deformed feature 405a on the output image 405 is controlled based on the deformed arrangement parameters 404. The appearance of the pixels is defined by the appearance parameters 403. In other words, the appearance, i.e. the colour and/or density, of the pixels is controlled based on the appearance parameters 403.

By casting rays from the pixels of the output image 405 with the location of the deformed feature 405a being defined by the deformed arrangement parameters 404 this may enable the deformed feature 405a of the output image 405 to be accurately positioned in the deformed location. In other words, the arrangement parameters may provide a mapping for the deformed feature 405a. For example, the arm of a human may be accurately deformed to a new location.

Similarly, by casting rays from the pixels of the output image 405 with the appearance of the pixels being defined by the appearance parameters 403 this may enable the appearance of the deformed feature of the output image 405 to correspond to the appearance of the feature of the input image 401.

The apparatus may be configured to generate further deformed arrangement parameters 404 by further modifying the location of at least one point of the feature 401a. In other words, the apparatus may, from the same input image 401, deform the arrangement parameters 402 in a different way, i.e. to a different pose or shape of the feature 401a.

The apparatus may also render a further output image 405 comprising a further deformed feature 405a corresponding to the feature 401a in dependence on the further deformed arrangement parameters 404 and the appearance parameters 403. In other words, the apparatus may render different output images 405 corresponding to the same input image 401 but with the deformed feature 405a in different arrangements.

By further modifying the location of at least one point of the feature 401a this may enable the further deformed feature 405a to be positioned in a different position to the deformed feature for the same input image 401. In this way, this may enable the deformation of the feature 401a to be controlled. For example, if the feature is a human body, then the arms may be moved into different positions. If this process is repeated for a plurality of further output images 405 this may provide frames for a video output in which the feature may move to a plurality of arrangements. For example, the arms of the human may be waved up and down. This may enable the apparatus to be used for VR/AR 301, gaming and avatars 302, and virtual try-on 303 implementations.

The apparatus may be configured to repeat the steps illustrated in Figure 4 for at least one subsequent input image 401 to render a corresponding subsequent output image 404. In other words, a plurality of input images 401 may be inputted into the apparatus. The plurality of input images 401 may comprise the same feature 401a from different viewpoints. In other words, the plurality of input images 401 may be 2D and may be generated by breaking down a 2D input image.

The apparatus may be configured to output a plurality of output images 405 corresponding to the plurality of input images 401. Consequently, the plurality of output images 405 may comprise the same, or a different, deformed feature 405a. If the output images 405 comprise the same deformed feature 405a then the 2D output images may be combined to form a 3D output image. The 3D output image may be rendered by numerically integrating the 2D output images 405.

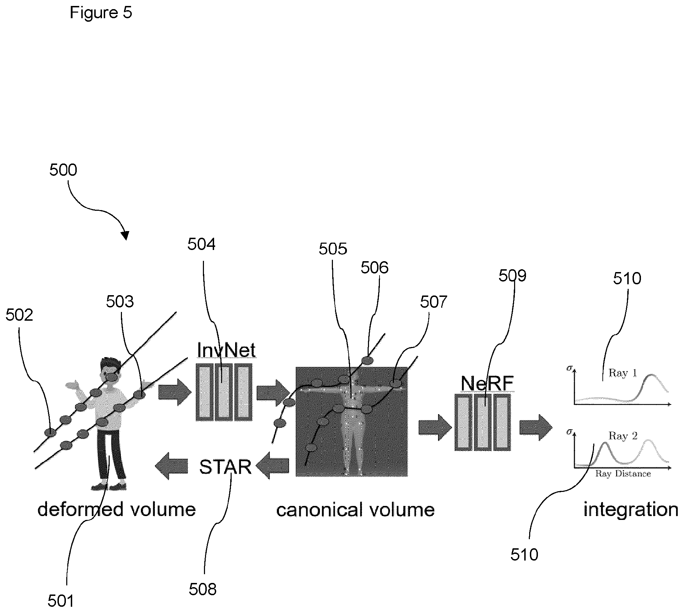

Figure 5 schematically illustrates an exemplary structure of the network architecture used in the image deformation apparatus.

From a given camera viewpoint, rays may be cast corresponding to each pixel of the output image 501. For each ray, the points 502, 503 may sampled along the ray in the deformed volume.

The image deformation apparatus network architecture 500 may comprise an inverse deformation model InvNet 504, preferably a neural network. The InvNet 504 may be used to deform the 3D points 502, 503 back to the canonical volume. Equation 1 represents in the process carried out by InvNet 504. The 3D points in the deformed volume are denoted by y and blendshape parameters are denoted by p. $x = InvNet \left(y, p\right)$

A sparse trained articulated human body regressor (STAR) model 508 is used to further separate p into pose and shape arrangement parameters 402. Preferably Invnet 504 is able to invert the blendshape model to the canonical domain. The representation may be used as a differentiable renderer for articulated (rigged) humans. This may provide fine grained 3D reconstruction and pose estimation by backpropagating errors from 2D images to blendshape parameters. Equation 2 represents the process carried out by the STAR model 508. $y = STAR \left(x, p\right)$

The points 505, 506 in the canonical volume 507 may be fed to a neural rendering network (NeRF) 509, which estimates the density, s, and colour values, c, of the points 505, 506. Equation 3 represents the process carried out by the NeRF network. The ray direction is denoted by d. The colour of the point may depend on the ray direction. $s , c = NeRF \left(x, d\right)$

The NeRF network may also take the ray directions 510 as input, because the colour values can be view dependent. A numerical integration method may be used to sum up the contribution of each 3D point to the pixel colour. Equations 4 and 5 represent the process carried out in the integration. The subscript denotes the index of the sampled 3D points density and colour values along the ray r. t denotes the distance between the consecutive points. Because the x coordinates depend on the inversion of y using InvNet, the pixel colour C may depend on r and p. $r = \left({x}_{0}, d\right) {x}_{i} = {x}_{0} + {\sum }_{j = 0}^{i} {t}_{j} d$ $C \left(r, p\right) = {\sum }_{i} {T}_{i} \left(1-exp\left(-{s}_{i}{t}_{i}\right)\right) {c}_{i} {T}_{i} = exp \left(-{\sum }_{j = 0}^{i} {s}_{j} {t}_{j}\right)$

During inference the apparatus may use the trained InvNet and NeRF networks to render humans, or other bodies, from arbitrary poses p and from arbitrary viewpoints by casting rays from those viewpoints and perform the rendering process on the rays.

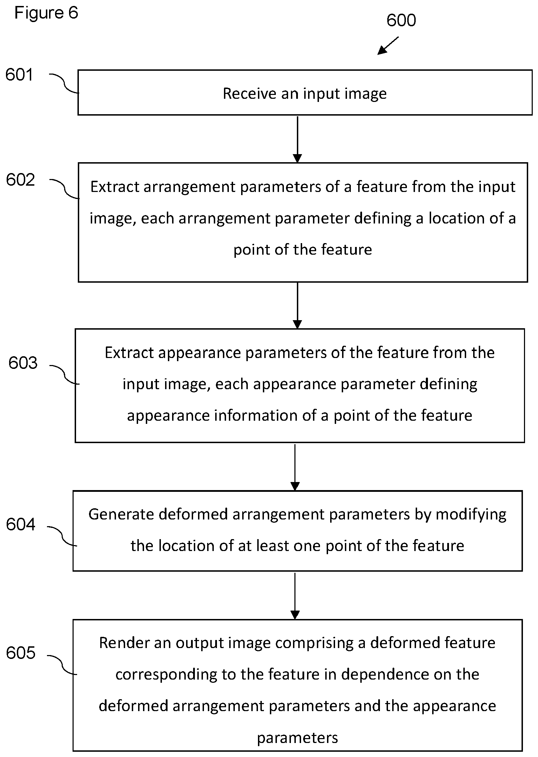

Figure 6 summarises an example of a method 600 for deforming an image. At step 601, the method 600 comprises receiving an input image. At step 602, the method 600 comprises extracting arrangement parameters of a feature from the input image, each arrangement parameter defining a location of a point of the feature. At step 603, the method 600 comprises extracting appearance parameters of the feature from the input image, each appearance parameter defining appearance information of a point of the feature. At step 604, the method 600 comprises generating deformed arrangement parameters by modifying the location of at least one point of the feature. At step 605, the method 600 comprises rendering an output image comprising a deformed feature corresponding to the feature in dependence on the deformed arrangement parameters and the appearance parameters.

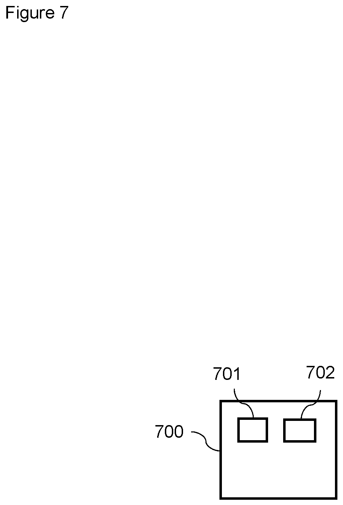

An example of an apparatus 700 configured to implement the methods described herein is schematically illustrated in Figure 7. The apparatus 700 may be implemented on an electronic device, such as a laptop, tablet, smart phone or TV.

The apparatus 700 comprises a processor 701 configured to process the datasets in the manner described herein. For example, the processor 701 may be implemented as a computer program running on a programmable device such as a Central Processing Unit (CPU). The apparatus 700 comprises a memory 702 which is arranged to communicate with the processor 701. Memory 702 may be a non-volatile memory. The processor 701 may also comprise a cache (not shown in Figure 7), which may be used to temporarily store data from memory 702. The apparatus 700 may comprise more than one processor 701 and more than one memory 702. The memory 702 may store data that is executable by the processor 701. The processor 701 may be configured to operate in accordance with a computer program stored in non-transitory form on a machine-readable storage medium. The computer program may store instructions for causing the processor 701 to perform its methods in the manner described herein.

Specifically, the deformation apparatus 701 may comprise one or more processors, such as processor 701, and a memory 702 storing in non-transient form data defining program code executable by the processor(s) to implement an image deformation model. The image deformation apparatus may receive an input image.

The image deformation apparatus may extract arrangement parameters of a feature from the input image, each arrangement parameter defining a location of a point of the feature. The image deformation apparatus may extract appearance parameters of the feature from the input image, each appearance parameter defining appearance information of a point of the feature. The image deformation apparatus may generate deformed arrangement parameters by modifying the location of at least one point of the feature. The image deformation apparatus may render an output image comprising a deformed feature corresponding to the feature in dependence on the deformed arrangement parameters and the appearance parameters.

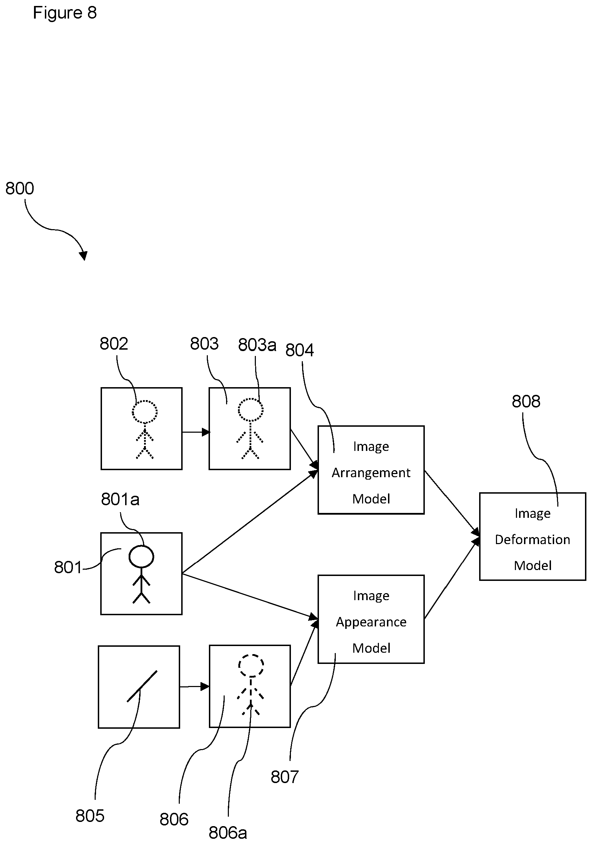

Figure 8 schematically illustrates the stages an input image may undergo in an exemplary image deformation training apparatus.

The apparatus is configured to receive a truth image 801. The truth image 801 comprises a truth image feature 801a. The feature 801a may comprise a body, such as a human or animal body. By having a body feature 801a the image deformation training apparatus may be used for VR/AR, gaming and avatars, and virtual try-on implementations, for example. In these implementations, aspects of the body, such as the arms or legs, may be deformed to present the viewer with an animated body representation.

The apparatus is configured to receive truth arrangement parameters 802 of a feature 801a of the truth image 801. There may be a plurality, or a set, of truth arrangement parameters 802. Each truth arrangement parameter 802 defines a location of a point of the feature 801a. In other words, the truth arrangement parameters 802 may provide the apparatus with a position of a plurality of locations of the feature 801a on the truth image 801. This is illustrated in Figure 8 by the dotted outline in the truth arrangement parameters 802 corresponding to the feature 801a from the truth image 801.

The truth arrangement parameters 802 may be indicative of a pose of the feature 801a. In other words, the location of the points of the feature 801a may be combined to define the pose of the feature 801a. For example, if the feature 801a is a human body, then the truth arrangement parameter 802 points located along the arms may by indicative of the pose of the human's arms. In this way, the apparatus may be configured to learn the pose of the feature 801a. Using the above example, the position of the arms of the human body may be learned.

The truth arrangement parameters 802 may also, or alternatively, be indicative of a shape of the feature 801a. In other words, the location of the points of the feature 801a may be combined to define the shape of the feature 801a. For example, if the feature 801a is a human body, then the truth arrangement parameter 802 points located along the torso may by indicative of the physique of the human body. In this way, the apparatus may be configured to learn the shape of the feature 801a. Using the above example, the torso of the human body and its aspect ratio may be learned.

The truth arrangement parameters 802 may represent the arrangement of the feature 801a by one or more blendshape models. For example, the blendshape model may comprise skinned multi-person linear body model (SMPL) or a sparse trained articulated human body regressor (STAR).

The apparatus is configured to generate an arrangement training image 803 from the truth arrangement parameters 802. In other words, the apparatus may use the positions defined by the truth arrangement parameters 802 to locate the feature 803a of the arrangement training image 803. The generation of the arrangement training image 803 may be carried out by an image arrangement model 804. As illustrated by the schematic example in Figure 8, the feature 803a of the arrangement training image 803 may not be positioned in the absolute correct position (Figure 8 represents this by the arms in the incorrection position - other errors would be understood by the skilled person). However, the positioning of the feature 803a of the arrangement training image 803 may become more accurate as the image arrangement model 804 is trained.

The apparatus is configured to adapt the image arrangement model 804 in dependence on a comparison between the truth image 801 and the arrangement training image 803. As described herein, the feature 803a of the arrangement training image 803 may be arranged in the absolute correct position. The difference between the feature 801a of the truth image 801 and the feature 803a of the arrangement training image 803 may be used for the comparison. Depending on the difference, the image arrangement model 804 may be adapted to better perform the generation of the arrangement training image 803.

Preferably, the apparatus is configured to adapt the image arrangement model 804 by a self-supervised network. By providing a self-supervised network this may enable the data input to be reduced which may improve the training time.

Additionally, preferably, the apparatus is configured so that the image arrangement model 804 is a generative model. By providing a generative model this may provide an arbitrarily large, perfect training set for the inversion network.

Preferably, the apparatus is configured to receive truth arrangement parameters 802 of a feature of the truth image by randomly sampling from the generative model. By receiving the truth arrangement parameters 802 of a feature 801a by randomly sampling from the generative model this may provide a diverse training set which may better train the image arrangement model 804.

The image arrangement model 804 may comprise an inverse deformation model InvNet 504, as illustrated in Figure 5. The neural network InvNet may be trained to invert the controllable human shape model. Specifically, the network may map the deformed and posed 3D coordinates back to the canonical 3D volume. The network inputs may be the 3D deformed coordinates and the blendshape parameters, while the outputs are the 3D coordinates in the canonical pose.

The goal of the inverse deformation network is to invert the blendshape model. In this exemplary embodiment the blendshape model is STAR 508. The blendshape models may not be invertible analytically. Therefore, a neural network may be trained to invert the blendshape model. Equation 6 may be minimised to invert in the blendshape model. ${min}_{InvNet} {E}_{x , p} \left[\left|x-x′\right|\right]$ *x'* = *InvNet*(*STAR*(*x,p*)*,p*) The blendshape parameters are denoted by p. The parameters of the InvNet neural network may be minimised. The objective is written in terms of the expectation of the L2 norm between the estimated points x' and the ground truth points x. In practice the minimization may be done on the sampled 3D points and blendshape parameters. It is preferable that the blendshape model is generative, so that both x and p are randomly sampled to obtain an arbitrarily large training set. The 3D points may be sampled uniformly from the surface of the mesh of the blendshape model, while p may be sampled from a Gaussian. In this implementation, the sampling is carried out online. In other words, the data generation takes place during the training. Thus, no training data is generated and stored beforehand.

It is also preferable that, during training, each training sample is only used once, thus the generalization error may be essentially zero, in principle. Therefore, if a very low objective value is obtained, it may be concluded that the InvNet performs well. In this implementation, the model does not overfit the deformation network to a specific set of the input images. In this way, the control of the shape and pose in novel instances may be allowed.

The network architecture design, as illustrated in Figure 5, may exploit the design of the blendshape model and encourage better inversion. The blendshape model, in this embodiment the STAR 508, deformations are defined by equation 7. $y = STAR \left(x, p\right) = {\sum }_{i} {w}_{i} \left(x\right) {R}_{i} \left(p\right) \left(x+B\left(x\right)p\right)$ x and y are in homogenous coordinates, B(x) are the position dependent blendshapes, and B(x)p is the linear combination using the parameters p as weights. Ri(p) are 4x4 rigid transformation matrices. The subscripts denote the indices of the joints. The shaped and posed points (x + B(x) p) may be transformed (skinning) using a linear combination of the transformations, where the weights wi(x) are position dependent. In the prior art, the STAR model B and w are only available in discrete vertex locations. In this embodiment, the apparatus computes B and w on the whole mesh surface by linearly interpolating the values using the barycentric coordinates.

In this exemplary embodiment, the internal values of the blendshape model B(x) and W(x) are estimated, where W = [w1, w2, ... wk] are the joint weights. Using these estimated values, the model may invert the blendshape deformations analytically, as defined by Equations 8 to 10. $W ′ \left(y\right) = MLP 1 \left(\left[{R}_{1}^{- 1}y,{R}_{2}^{- 1}y,…,{R}_{K}^{- 1}y\right], p\right)$ $B ′ \left(y\right) = MLP 2 \left(\left[{R}_{1}^{- 1}y,{R}_{2}^{- 1}y,…,{R}_{K}^{- 1}y\right], p\right)$ $x ′ = {\left({\sum }_{i} w {′}_{i} \left(y\right) {R}_{i} \left(p\right)\right)}^{- 1} y - B ′ \left(y\right) p$

The two multi-layer perceptions may be used for the estimations (MLP1 and MLP2). Both take a list of 3D coordinates and p as inputs. The 3D coordinates y are expressed in the reference frame of the joints Ri.

This is preferable, as the network may not be required to do the actual inversion, but rather simply find a robust estimate of B and W.

Once the blendshape internal values are estimated, the model may use them directly in the objective, as they are readily available. Instead of minimizing the error between the 3D points, this may be done with the internal values. The full objective is defined in Equation 11. ${min}_{InvNet} {E}_{x , s} \left[\left|x-x′\right|+\left|W\left(x\right)-W′\left(y\right)\right|+\left|B\left(x\right)-B′\left(y\right)\right|\right]$

Alternatively, it may be possible to analytically invert blendshape models, such as STAR. Instead of learning W'(y) and B'(y), they may be calculated directly from the internal blendshape model parameters. Specifically, STAR contains 3D vertex coordinates, as defined in Equation 12. ${x}_{1} , {x}_{2} , … , {x}_{N}$

Additionally, the 3D vertex coordinated may contain the values of the blendshapes Bj and the joint weights Wj, as defined in Equation 13. ${B}_{j} = B \left({x}_{j}\right) and {W}_{j} = W \left({x}_{j}\right)$

Bj and Wj values are matrices and vectors respectively.

In this exemplary embodiment, there are three inversion steps.

Firstly, the forward deformation is calculated for all xj points, as defined in Equation 14. ${y}_{j} = STAR \left({x}_{j}, p\right) = {\sum }_{i} {W}_{ji} {R}_{i} \left(p\right) \left({x}_{j}+{B}_{j}p\right)$

Secondly, the blendshape parameters are diffused in the deformed 3D volume. For a sampled point y we calculate, the diffusion is defined by Equation 15. $B ′ \left(y\right) = \frac{{\sum }_{j} exp \left(-\frac{{\left|y-{y}_{j}\right|}^{2}}{2 {width}^{2}}\right) {B}_{j}}{{\sum }_{j} exp \left(-\frac{{\left|y-{y}_{j}\right|}^{2}}{2 {width}^{2}}\right)} and W ′ \left(y\right) = \frac{{\sum }_{j} exp \left(-\frac{{\left|y-{y}_{j}\right|}^{2}}{2 {width}^{2}}\right) {W}_{j}}{{\sum }_{j} exp \left(-\frac{{\left|y-{y}_{j}\right|}^{2}}{2 {width}^{2}}\right)}$ The width is a parameter that is roughly the size of a triangle in the mesh or smaller. When the width approaches zero, all yi points can be perfectly inverted on the limit width→0.

Thirdly, an inversion formula is used as before and the estimate is computed by Equation 16. $x ′ = {\left({\sum }_{i} w {′}_{i} \left(y\right) {R}_{i} \left(p\right)\right)}^{- 1} y - B ′ \left(y\right) p$

The summation is applied to the joints (index i), whereas above, in the case of the diffusion, the sum was applied to the vertices (index j).

Optionally, the inversion may comprise a fourth and fifth step, in which the blendshape parameters may be obtained from xi via diffusion for x', then checked for consistency against W(y). This can be advantageous because the blendshape model deformations are not invertible on the full 3D volume. When the consistency fails (e.g. L2 distance is too large), the point may be discarded from the rendering step.

The apparatus is configured to receive truth appearance parameters 805 of the feature 801a from the truth image 801, each truth appearance parameter 805 defining appearance information of a point of the feature 801. There may be a plurality, or a set, of truth appearance parameters 805. Each truth appearance parameter 805 defines appearance information of a point of the feature 801a. In other words, the truth appearance parameters 805 may provide the apparatus with the appearance at different points of the feature 801a on the truth image 801. This is illustrated in Figure 8 by the solid line in the truth appearance parameters 805 corresponding to the solid line of the feature 801a from the truth image 801.

The truth appearance parameters 805 may comprise the colour of the pixels of the feature 801a. In other words, the colour of the pixels in the feature 801a may be combined to define the colour of the feature 801a. For example, if the feature 801a is a human body, then the appearance parameter 805 may comprise the colour of the human's outfit, or clothing. In this way, the apparatus may be configured to learn the colour of the feature 801a. Using the above example, the colour of the clothing may be learned.

The truth appearance parameters 805 may comprise the density of the pixels of the feature 801a. In other words, the density of the pixels in the feature 801a may define the light absorption in the volume of the feature 801a. For example, if the feature 801a is a human body, then the appearance parameter 802 may comprise the density of the image of the human. In this way, the apparatus may be configured to learn the density of the feature 801a. Using the above example, the density of the image of the human may be learned.

The truth appearance parameters 804 may represent the appearance of the feature 801a by Neural Radiance Fields (NeRF). NeRF-based appearance models achieve much higher quality renderings, compared to classic techniques.

The apparatus is configured to generate an appearance training image 806 from the truth appearance parameters 805. In other words, the apparatus may use the appearance information defined by the truth appearance parameters 805 to render the appearance of the feature 806a of the arrangement training image 806. The generation of the appearance training image 806 may be carried out by an image appearance model 807. As illustrated by the schematic example in Figure 8, the feature 806a of the appearance training image 806 may not comprise the absolute correct appearance (Figure 8 represents this by a dashed line - other errors would be understood by the skilled person). However, the positioning of the feature 806a of the arrangement training image 806 may be become more accurate as the image arrangement model 804 is trained.

The apparatus is configured to adapt the image appearance model 807 in dependence on a comparison between the truth image 801 and the appearance training image 806. As described herein, the feature 806a of the arrangement training image 806 may not comprise the absolute correct appearance. The difference between the feature 801a of the truth image 801 and the feature 806a of the appearance training image 806 may be used for the comparison. Depending on the difference, the image appearance model 807 may be adapted to better perform the generation of the appearance training image 806.

The image appearance model 807 may comprise a Neural Renderer NeRFRig 509, as illustrated in Figure 5. Given a set of truth images 801 and initial estimates of blendshape parameters, the neural network NeRF may be trained by learning the appearance model for the specific subject in the images. For each pixel in the training set the appearance training image 806 may be rendered. Given the truth image 801 and the appearance training image, the error may be backpropagated to the NeRF network parameters and to the input blendshape parameters.

Once the InvNet 504 is trained, the parameters may be fixed and used in the training of the full setup. Given a set of images and their corresponding initial blendshape parameters, the objective, as defined in Equation 17 may be optimised. ${min}_{NeRF , P} {E}_{{r}_{i} , {p}_{i} , i} \left[\left|C\left({r}_{i}, {p}_{i}\right)-{C}_{gt}\left({r}_{i}\right)\right|\right]$

P= [p1, p2, pn] denotes the parameters associated with the images I = 1, 2, ..., n. The subscript of r refers to the image from where the ray ri is sampled. P is initialised with the initial blendshape estimates, then both P and the appearance model NeRF 509 are optimised.

By back propagating the error in both the image arrangement model 804 and the image appearance model 807 the trained image deformation model may be used as a differentiable renderer for humans. The image deformation model may also achieve fine grained 3D reconstruction and pose estimation. In this way, the image defamation model may be suitable for VR/AR 301, gaming and avatars 302, and virtual try-on 303 implementations.

The apparatus is configured to adapt the image deformation model 808 in dependence on the image arrangement model 804 and the image appearance model 807. In other words, the training of the image arrangement model 804 and the image appearance model 807 may be used in combination to train the image deformation model 808.

It is preferable for the image deformation model 808 to be trained in relation to both the arrangement and the appearance of the feature 801a of the image 801. In this way, the image deformation model 808 may be able to deform the arrangement of the feature 401a of the input image 401 while maintaining overall appearance of the feature 401a.

With a self-supervised training objective in the training apparatus, the deformation apparatus may maintain the controllability of the human models after training. Controllability is maintained because the deformation model is learned for a wide range of possible samples.

It is preferable, for the apparatus to be configured to adapt the image arrangement model 804 before generating the appearance training image 806a. More preferably, the image arrangement model 804 may be trained before the appearance training image 806a is generated. By adapting the image arrangement model 804 before generating the appearance training image 804, and therefore before adapting the image appearance model 806, this may enable the image arrangement model 804 to be optimised, by minimising the error, before the image appearance model 807 is trained. In this way, the training of both models may not interfere with one another.

The apparatus may be configured to receive one or more subsequent sets of truth arrangement parameters 802 of a feature 801a of the truth image 801, and generate a subsequent arrangement training image 803 from each corresponding subsequent set of truth arrangement parameters 802, and adapt the image arrangement model 804 in dependence on a comparison between the truth image 801 and each of the subsequent arrangement training images 803. In other words, the arrangement training steps may be repeated for a range of different samples of truth arrangement parameters 802 with the same truth image 801. By receiving subsequent sets of truth arrangement parameters 802 this may enable the image arrangement model 804 to be trained by a plurality of iterations from a single truth image 801.

Preferably, the one or more subsequent sets of truth arrangement parameters 802 of a feature 801a of the truth image 801 are received by randomly sampling the truth image 801 and each subsequent set of truth arrangement parameters 802 being different from any previous set of truth arrangement parameters 802. By receiving the truth arrangement parameters 802 of a feature by randomly sampling the from the truth image 801 this may provide a diverse training set which may better train the image arrangement model 804.

Similarly, the apparatus may be configured to receive one or more subsequent sets of truth appearance parameters 805 of the feature 801a from the truth image 801, and generate a subsequent appearance training image 806 from each corresponding subsequent set of truth appearance parameters 805, and adapt the image appearance model 807 in dependence on a comparison between the truth image 801 and each of the subsequent appearance training images 807. In other words, the appearance training steps may be repeated for a range of different samples of truth appearance parameters 805 with the same truth image 801. By receiving subsequent sets of truth appearance parameters 805 this may enable the image appearance model to be trained by a plurality of iterations from a single truth image 801.

The apparatus may be configured to repeat the steps illustrated in Figure 8 for at least one subsequent truth image 801 to train the image deformation model 808 through multiple iterations. In other words, a plurality of truth images 801 may be inputted into the apparatus. The truth images 801 may comprise the same feature 801a, possibly in a different arrangement, or they may comprise completely different features 801a. By repeating the steps for one or more subsequent truth images to provide subsequent training iterations this may enable the image deformation model to be further trained. In particular, a diverse training set with different features 801a in the truth image 801 may provide a diverse training set which may improve the training.

The training apparatus may exploit the fact that the blendshape models are generative. Thus, the apparatus can sample a practically infinite amount of 3D points from the surface of the blendshape model with random shape and pose parameters. In this way, the training set may be arbitrarily large for the inversion network. The error is minimised between the ground truth canonical 3D coordinates and the 3D coordinates predicted by the deformation model. As sampling is from a range of possible shapes and deformations, the model may generalise to a range of human shapes and positions.

The training apparatus may exploit the knowledge that the apparatus is trying to invert a specific type of deformation which are described by a blendshape model. Instead of directly estimating the 3D coordinates, the inversion network estimates a set of internal parameters of the blendshape, then using these internal parameters, the 3D coordinates may be obtained analytically.

Since all the internal blendshape parameters may be obtained by the truth image 801 sampling process, these can be used as supervision signals during training. By adding a loss term between the truth image 801 and estimated blendshape internal parameters, the inversion network may perform better.

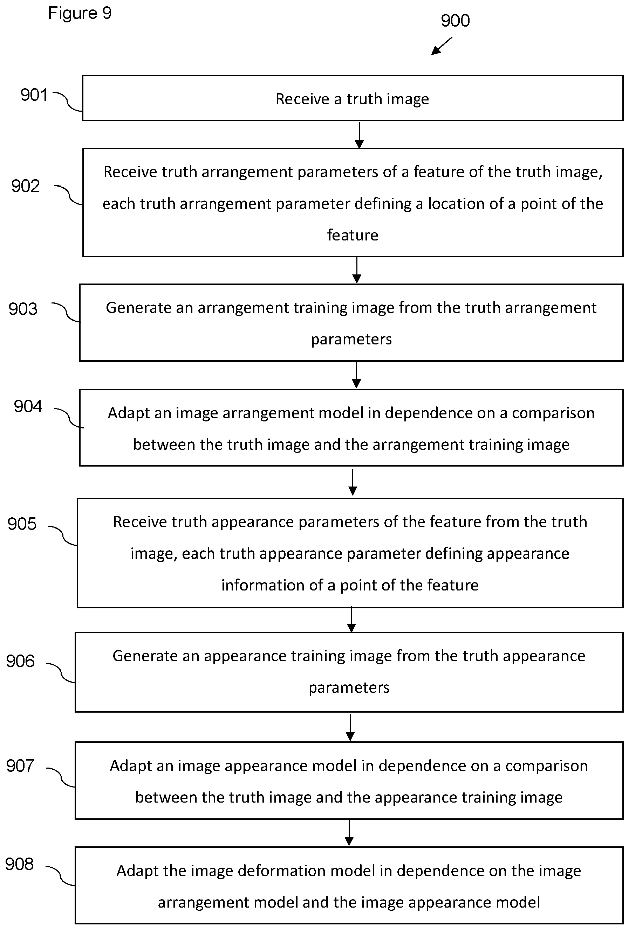

Figure 9 summarises an example of a method 900 for training an image deformation model. At step 901, the method 900 comprises receiving a truth image. At step 902, the method 900 comprises receiving truth arrangement parameters of a feature of the truth image, each truth arrangement parameter defining a location of a point of the feature. At step 903, the method 900 comprises generating an arrangement training image from the truth arrangement parameters. At step 904, the method 900 comprises adapting an image arrangement model in dependence on a comparison between the truth image and the arrangement training image. At step 905, the method 900 comprises receiving truth appearance parameters of the feature from the truth image, each truth appearance parameter defining appearance information of a point of the feature. At step 906, the method 900 comprises generating an appearance training image from the truth appearance parameters. At step 907, the method 900 comprises adapting an image appearance model in dependence on a comparison between the truth image and the appearance training image. At step 908, the method 900 comprises adapting the image deformation model in dependence on the image arrangement model and the image appearance model.

The apparatus 700 may also be used to train an image deformation model as described herein. The deformation training apparatus may comprise one or more processors, such as processor 901, and a memory 902. The image deformation training apparatus may receive a truth image. The image deformation training apparatus may receive truth arrangement parameters of a feature of the truth image, each truth arrangement parameter defining a location of a point of the feature. The image deformation training apparatus may generate an arrangement training image from the truth arrangement parameters. The image deformation training apparatus may adapt an image arrangement model in dependence on a comparison between the truth image and the arrangement training image. The image deformation training apparatus may receive truth appearance parameters of the feature from the truth image, each truth appearance parameter defining appearance information of a point of the feature. The image deformation training apparatus may generate an appearance training image from the truth appearance parameters. The image deformation training apparatus may adapt an image appearance model in dependence on a comparison between the truth image and the appearance training image. The image deformation training apparatus may and adapt the image deformation model in dependence on the image arrangement model and the image appearance model.

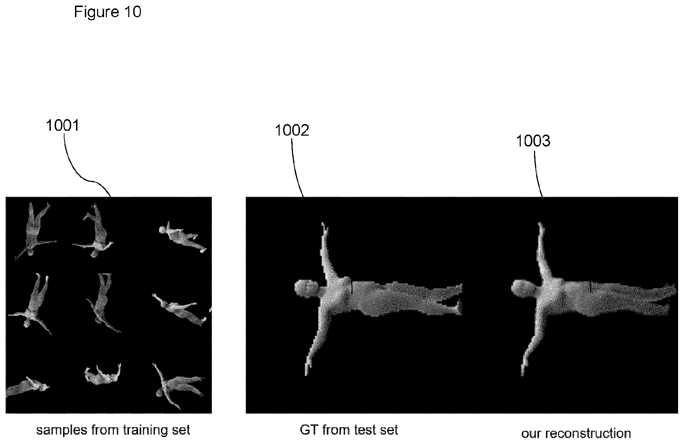

Figure 10 illustrates a post synthesis and a novel view output image of an exemplary embodiment of the present invention.

The testing was carried out on synthetic data for the input image 1001. 100 training and 100 test samples were used. Each sample comprises a random pose and shape and were from different viewpoints. The resolution of the images was 128px x 128px. A normal map texture was used, and the images were rendered with a classic mesh renderer.

The exemplary embodiment of the presently described approach achieved a peak signal to noise ratio (PSNR) of 24.7 on the test set. The output image 1002 shows a sample from the held-out test set from a random novel view and pose. The output image 1003 shows the output of the exemplary embodiment of the presently proposed approach. The output image 1003 of the rendering of the learned model from the same viewpoint and pose as 1002.

In view of the foregoing description, it will be evident to a person skilled in the art that various modifications may be made within the scope of the invention.

## Claims

1. An image deformation apparatus (700), the apparatus comprising one or more processors (701) and a memory storing in non-transient form data defining program code executable by the one or more processors (701) to implement an image deformation model (400), the apparatus (700) being configured to:
receive an input image (401);
extract arrangement parameters (402) of a feature (401a) from the input image (401), each arrangement parameter (402) defining a location of a point of the feature (401a);
extract appearance parameters (403) of the feature from the input image (401), each appearance parameter (403) defining appearance information of a point of the feature (401a);
generate deformed arrangement parameters (404) by modifying the location of at least one point of the feature (401a); and
render an output image (405) comprising a deformed feature (405a) corresponding to the feature (401a) in dependence on the deformed arrangement parameters (404) and the appearance parameters (403),
**characterized in that**
the one or more processors (701) are configured to render the output image (405) by casting rays from pixels of the output image (405), the location of the deformed feature (405a) being defined by the deformed arrangement parameters (404) and the appearance of the pixels being defined by the appearance parameters (403).

2. The image deformation apparatus (700) of claim 1, wherein the one or more processors (701) are configured to generate further deformed arrangement parameters (404) by further modifying the location of at least one point of the feature (401a); and render a further output image (405) comprising a further deformed feature (405a) corresponding to the feature (401a) in dependence on the further deformed arrangement parameters (404) and the appearance parameters (403).

3. The image deformation apparatus (700) of claim 2, wherein the one or more processors (701) are configured to render the further output image (405) by casting rays from pixels of the further output image (405), the location of the further deformed feature (405a) being defined by the further deformed arrangement parameters (404) and the appearance of the pixels being defined by the appearance parameters (403).

4. The image deformation apparatus (700) of any preceding claim, wherein the one or more processors (701) are configured so that the feature (401a) comprises a human or animal body.

5. The image deformation apparatus (700) of any preceding claim, wherein the one or more processors (701) are configured so that the arrangement parameters (402) are indicative of a pose of the feature (401a).

6. The image deformation apparatus (700) of any preceding claim, wherein the one or more processors (701a) are configured so that the arrangement parameters (402) are indicative of a shape of the feature (401a).

7. The image deformation apparatus (700) of any preceding claim, wherein the one or more processors (701) are configured so that the appearance parameters (403) comprise the colour of the pixels of the feature (401a).

8. The image deformation apparatus (700) of any preceding claim, wherein the one or more processors (701) are configured so that the appearance parameters (403) comprise the density of the pixels of the feature (401a).

9. The image deformation apparatus (700) of any preceding claim, wherein one or more processors (701) are configured to repeat the steps of any preceding claim for at least one subsequent input image (401) to render a corresponding subsequent output image (405); and render a 3D output image from the at least two output images (405).

10. The image deformation apparatus (700) of claim 9, wherein the one or more processors (701a) are configured so that output image (405) and the subsequent output image (405) are 2D and comprise the same deformed feature (405a) from different viewpoints, or wherein the one or more processors (701) are configured to render the 3D output image from the at least two output images (405) by numerical integration.

11. A method (600) for deforming an image, the method (600) comprising:
receiving (601) an input image;
extracting (602) arrangement parameters of a feature from the input image, each arrangement parameter defining a location of a point of the feature;
extracting (603) appearance parameters of the feature from the input image, each appearance parameter defining appearance information of a point of the feature;
generating (604) deformed arrangement parameters by modifying the location of at least one point of the feature; and
rendering (605) an output image comprising a deformed feature corresponding to the feature in dependence on the deformed arrangement parameters and the appearance parameters,
**characterized in that**
the output image is rendered by casting rays from pixels of the output image, the location of the deformed feature being defined by the deformed arrangement parameters and the appearance of the pixels being defined by the appearance parameters.

## Patentansprüche

1. Bildverformungseinrichtung (700), wobei die Einrichtung einen oder mehrere Prozessoren (701) und einen Speicher umfasst, der Daten in nichttransienter Form speichert, die einen Programmcode definieren, der durch den einen oder die mehreren Prozessoren (701) ausführbar ist, um ein Bildverformungsmodell (400) zu implementieren, wobei die Einrichtung (700) zu Folgendem ausgelegt ist:
Empfangen eines Eingangsbilds (401);
Extrahieren von Anordnungsparametern (402) eines Merkmals (401a) aus dem Eingabebild (401), wobei jeder Anordnungsparameter (402) eine Position eines Punkts des Merkmals (401a) definiert;
Extrahieren von Erscheinungsbildparametern (403) des Merkmals aus dem Eingabebild (401), wobei jeder Erscheinungsbildparameter (403) Erscheinungsbildinformationen eines Punkts des Merkmals (401a) definiert;
Erzeugen von verformten Anordnungsparametern (404) durch Modifizieren der Position mindestens eines Punkts des Merkmals (401a); und
Rendern eines Ausgabebilds (405), das ein verformtes Merkmal (405a) umfasst, das dem Merkmal (401a) entspricht, in Abhängigkeit von den verformten Anordnungsparametern (404) und den Erscheinungsbildparametern (403),
**dadurch gekennzeichnet, dass**
der eine oder die mehreren Prozessoren (701) dazu ausgelegt sind, das Ausgabebild (405) durch Werfen von Strahlen von Pixeln des Ausgabebilds (405) zu rendern, wobei die Position des verformten Merkmals (405a) durch die verformten Anordnungsparameter (404) definiert ist und das Erscheinungsbild der Pixel durch die Erscheinungsbildparameter (403) definiert ist.

2. Bildverformungseinrichtung (700) nach Anspruch 1, wobei der eine oder die mehreren Prozessoren (701) dazu ausgelegt sind, weitere verformte Anordnungsparameter (404) durch weiteres Modifizieren der Position mindestens eines Punkts des Merkmals (401a) zu erzeugen; und ein weiteres Ausgabebild (405), das ein weiteres verformtes Merkmal (405a) umfasst, das dem Merkmal (401a) entspricht, in Abhängigkeit von den weiteren verformten Anordnungsparametern (404) und den Erscheinungsbildparametern (403) zu rendern.

3. Bildverformungseinrichtung (700) nach Anspruch 2, wobei der eine oder die mehreren Prozessoren (701) dazu ausgelegt sind, das weitere Ausgabebild (405) durch Werfen von Strahlen von Pixeln des weiteren Ausgabebilds (405) zu rendern, wobei die Position des weiteren verformten Merkmals (405a) durch die weiteren verformten Anordnungsparameter (404) definiert ist und das Erscheinungsbild der Pixel durch die Erscheinungsbildparameter (403) definiert ist.

4. Bildverformungseinrichtung (700) nach einem der vorhergehenden Ansprüche, wobei der eine oder die mehreren Prozessoren (701) so ausgelegt sind, dass das Merkmal (401a) einen menschlichen Körper oder einen Tierkörper umfasst.

5. Bildverformungseinrichtung (700) nach einem der vorhergehenden Ansprüche, wobei der eine oder die mehreren Prozessoren (701) so ausgelegt sind, dass die Anordnungsparameter (402) eine Haltung des Merkmals (401a) angeben.

6. Bildverformungseinrichtung (700) nach einem der vorhergehenden Ansprüche, wobei der eine oder die mehreren Prozessoren (701a) so ausgelegt sind, dass die Anordnungsparameter (402) eine Form des Merkmals (401a) angeben.

7. Bildverformungseinrichtung (700) nach einem der vorhergehenden Ansprüche, wobei der eine oder die mehreren Prozessoren (701) so ausgelegt sind, dass die Erscheinungsbildparameter (403) die Farbe der Pixel des Merkmals (401a) umfassen.

8. Bildverformungseinrichtung (700) nach einem der vorhergehenden Ansprüche, wobei der eine oder die mehreren Prozessoren (701) so ausgelegt sind, dass die Erscheinungsbildparameter (403) die Dichte der Pixel des Merkmals (401a) umfassen.

9. Bildverformungseinrichtung (700) nach einem der vorhergehenden Ansprüche, wobei ein oder mehrere Prozessoren (701) dazu ausgelegt sind, die Schritte nach einem der vorhergehenden Ansprüche für mindestens ein nachfolgendes Eingabebild (401) zu wiederholen, um ein entsprechendes nachfolgendes Ausgabebild (405) zu rendern; und ein 3D-Ausgabebild aus den mindestens zwei Ausgabebildern (405) zu rendern.

10. Bildverformungseinrichtung (700) nach Anspruch 9, wobei der eine oder die mehreren Prozessoren (701a) so ausgelegt sind, dass das Ausgabebild (405) und das nachfolgende Ausgabebild (405) 2D sind und das gleiche verformte Merkmal (405a) aus unterschiedlichen Perspektiven umfassen, oder wobei der eine oder die mehreren Prozessoren (701) dazu ausgelegt sind, das 3D-Ausgabebild aus den mindestens zwei Ausgabebildern (405) durch numerische Integration zu rendern.

11. Verfahren (600) zum Verformen eines Bilds, wobei das Verfahren (600) Folgendes umfasst:
Empfangen (601) eines Eingabebilds;
Extrahieren (602) von Anordnungsparametern eines Merkmals aus dem Eingabebild, wobei jeder Anordnungsparameter eine Position eines Punkts des Merkmals definiert;
Extrahieren (603) von Erscheinungsbildparametern des Merkmals aus dem Eingabebild, wobei jeder Erscheinungsbildparameter Erscheinungsbildinformationen eines Punkts des Merkmals definiert;
Erzeugen (604) von verformten Anordnungsparametern durch Modifizieren der Position mindestens eines Punkts des Merkmals; und
Rendern (605) eines Ausgabebilds, das ein verformtes Merkmal umfasst, das dem Merkmal entspricht, in Abhängigkeit von den verformten Anordnungsparametern und den Erscheinungsbildparametern,
**dadurch gekennzeichnet, dass**
das Ausgabebild durch Werfen von Strahlen von Pixeln des Ausgabebilds gerendert wird, wobei die Position des verformten Merkmals durch die verformten Anordnungsparameter definiert ist und das Erscheinungsbild der Pixel durch die Erscheinungsbildungsparameter definiert ist.

## Revendications

1. Appareil de déformation d'image (700), l'appareil comprenant un ou plusieurs processeurs (701) et une mémoire stockant sous forme non transitoire des données définissant un code de programme exécutable par les un ou plusieurs processeurs (701) pour mettre en œuvre un modèle de déformation d'image (400), l'appareil (700) étant configuré pour :
recevoir une image d'entrée (401) ;
extraire des paramètres d'agencement (402) d'une caractéristique (401a) à partir de l'image d'entrée (401), chaque paramètre d'agencement (402) définissant un emplacement d'un point de la caractéristique (401a) ;
extraire des paramètres d'apparence (403) de la caractéristique à partir de l'image d'entrée (401), chaque paramètre d'apparence (403) définissant une information d'apparence d'un point de la caractéristique (401a) ;
générer des paramètres d'agencement modifiés (404) en modifiant l'emplacement d'au moins un point de la caractéristique (401a) ; et
restituer une image de sortie (405) comprenant une caractéristique déformée (405a) correspondant à la caractéristique (401a) en fonction des paramètres d'agencement modifiés (404) et des paramètres d'apparence (403),
**caractérisé en ce que**
les un ou plusieurs processeurs (701) sont configurés pour restituer l'image de sortie (405) par projection de rayons à partir de pixels de l'image de sortie (405), l'emplacement de la caractéristique déformée (405a) étant défini par les paramètres d'agencement modifiés (404) et l'apparence des pixels étant définie par les paramètres d'apparence (403).

2. Appareil de déformation d'image (700) selon la revendication 1, dans lequel les un ou plusieurs processeurs (701) sont configurés pour générer d'autres paramètres d'agencement modifiés (404) en modifiant en outre l'emplacement d'au moins un point de la caractéristique (401a) ; et restituer une image de sortie supplémentaire (405) comprenant une caractéristique déformée supplémentaire (405a) correspondant à la caractéristique (401a) en fonction des paramètres d'agencement modifiés supplémentaires (404) et des paramètres d'apparence (403).

3. Appareil de déformation d'image (700) selon la revendication 2, dans lequel les un ou plusieurs processeurs (701) sont configurés pour restituer l'image de sortie supplémentaire (405) en projetant des rayons à partir de pixels de l'image de sortie supplémentaire (405), l'emplacement de la caractéristique déformée supplémentaire (405a) étant défini par les paramètres d'agencement modifiés supplémentaires (404) et l'apparence des pixels étant définie par les paramètres d'apparence (403).

4. Appareil de déformation d'image (700) selon l'une quelconque des revendications précédentes, dans lequel les un ou plusieurs processeurs (701) sont configurés de sorte que la caractéristique (401a) comprenne un corps humain ou animal.

5. Appareil de déformation d'image (700) selon l'une quelconque des revendications précédentes, dans lequel les un ou plusieurs processeurs (701) sont configurés de sorte que les paramètres d'agencement (402) soient indicatifs d'une pose de la caractéristique (401a).

6. Appareil de déformation d'image (700) selon l'une quelconque des revendications précédentes, dans lequel les un ou plusieurs processeurs (701a) sont configurés de sorte que les paramètres d'agencement (402) soient indicatifs d'une forme de la caractéristique (401a).

7. Appareil de déformation d'image (700) selon l'une quelconque des revendications précédentes, dans lequel les un ou plusieurs processeurs (701) sont configurés de sorte que les paramètres d'apparence (403) comprennent la couleur des pixels de la caractéristique (401a).

8. Appareil de déformation d'image (700) selon l'une quelconque des revendications précédentes, dans lequel les un ou plusieurs processeurs (701) sont configurés de sorte que les paramètres d'apparence (403) comprennent la densité des pixels de la caractéristique (401a).

9. Appareil de déformation d'image (700) selon l'une quelconque des revendications précédentes, dans lequel un ou plusieurs processeurs (701) sont configurés pour répéter les étapes de l'une quelconque des revendications précédentes pour au moins une image d'entrée suivante (401) pour restituer une image de sortie suivante correspondante (405) ; et pour restituer une image de sortie 3D à partir des au moins deux images de sortie (405).

10. Appareil de déformation d'image (700) selon la revendication 9, dans lequel les un ou plusieurs processeurs (701a) sont configurés de sorte que l'image de sortie (405) et l'image de sortie suivante (405) soient des images 2D et comprennent la même caractéristique déformée (405a) à partir de points de vue différents, ou dans lequel les un ou plusieurs processeurs (701) sont configurés pour restituer l'image de sortie 3D à partir des au moins deux images de sortie (405) par intégration numérique.

11. Procédé (600) de déformation d'une image, le procédé (600) comprenant les étapes suivantes :
recevoir (601) une image d'entrée ;
extraire (602) des paramètres d'agencement d'une caractéristique à partir de l'image d'entrée, chaque paramètre d'agencement définissant un emplacement d'un point de la caractéristique ;
extraire (603) des paramètres d'apparence de la caractéristique à partir de l'image d'entrée, chaque paramètre d'apparence définissant des informations d'apparence d'un point de la caractéristique ;
générer (604) des paramètres d'agencement modifiés en modifiant l'emplacement d'au moins un point de la caractéristique ; et
restituer (605) une image de sortie comprenant une caractéristique déformée correspondant à la caractéristique en fonction des paramètres d'agencement modifiés et des paramètres d'apparence,
**caractérisé en ce que**
l'image de sortie est restituée par projection de rayons à partir de pixels de l'image de sortie, l'emplacement de la caractéristique déformée étant défini par les paramètres d'agencement modifiés et l'apparence des pixels étant définie par les paramètres d'apparence.
